# EUROPEAN PATENT APPLICATION

(11) **EP 1 369 536 A1**
(43) Date of publication of application: **10.12.2003**
(21) Application number: 03253097.4
(22) Date of filing: 17.05.2003
(51) Int. Cl.: E03C 1/044, G05D 23/13, F16K 11/044

(54) **Ablutionary water supply installation comprising means for avoiding the overshoot of a selected temperature**

(30) Priority: 17.05.2002 GB 0211317
(71) Applicant: Kohler Mira Ltd, Cheltenham Gloucestershire GL52 5EP (GB)
(72) Inventor: Beck, Nicholas John, Tewkesbury, Gloucestershire GL20 5SS (GB); Conway, Sean Patrick, Cranham, Gloucestershire GL4 8HT (GB)
(74) Representative: Wightman, David Alexander

(57) **Abstract**

A water supply installation for ablutionary appliances has a mixer valve 2 for mixing and blending hot and cold water in accordance with user selection of water temperature and a damping chamber 14 downstream of the mixer valve 2 for reducing transient temperature overshoots when the selected water temperature is changed.

## Description

This invention concerns improvements in or relating to ablutionary water supply installations. The invention has particular, but not exclusive, application to installations for mixing hot and cold water for showers.

Shower installations employing a mixer valve for mixing hot and cold water to provide a supply of blended water having a desired temperature are well known.

The known mixer valves typically employ a valve mechanism for controlling the relative proportions in which the hot and cold water supplies are mixed in response to user selection of the desired water temperature.

A problem with this type of installation is that the temperature of the blended water can vary from that selected due to changes in the temperature and/or pressure of one or both supplies.

In thermostatically controlled mixer valves, the valve mechanism is automatically adjusted in response to detected changes in the water temperature from that selected to maintain the water temperature substantially constant.

Problems can still arise, however, when the user changes the selected water temperature. This can cause the valve mechanism to overshoot the selected temperature resulting in the user experiencing a water temperature different to that expected until the mechanism settles to produce water having the selected temperature.

The overshoot may only last a few seconds and is generally not dangerous. Nevertheless, it is usually noticeable to the user and produces an uncomfortable experience.

This is a particular problem when the user selects a higher water temperature. For example, if the selected temperature is adjusted from 25°C to 40°C, the valve mechanism can overshoot to a full hot temperature before settling at the selected temperature of 40°C. As a result, the water temperature at the outlet can be as high as the hot supply, say 60°C,

Plastic materials are increasingly being used for many parts and fittings employed in shower installations. These materials are preferred for manufacture because of their low cost, lightweight and ease of forming complex shapes by moulding.

The low thermal mass and low thermal conductivity of these materials, however, ensures that the temperature of the water discharged from the mixer valve does not change significantly between the mixer valve and the spray fitting.

This is desirable during steady state operation of the mixer valve to provide a source of blended water having a desired temperature. However, if a temperature overshoot occurs on changing the desired temperature, the user is exposed to the full effect of the overshoot in the temperature of the water discharged from the spray fitting.

For some installations, such as in hospitals, strict standards are set as to the extent of any transient temperature overshoot that is allowed and mixer valves are tested for compliance with the standard on a regular basis.

This has lead to increasingly complex and more costly designs to meet the standards and in some cases the response of the thermostat is deliberately skewed in order to reduce the overshoot. This is undesirable as it does not result in accurate showering temperatures.

The present invention has been made from a consideration of the foregoing problems and disadvantages of existing mixer valves.

Thus, it is an object of the present invention to provide an ablutionary water supply installation in which the effects of transient temperature overshoots are mitigated in a simple, reliable manner.

It is another object of the present invention to provide a method of reducing transient temperature overshoots when adjusting the temperature of blended water delivered to an ablutionary appliance.

It is yet another object of the present invention to provide shower control apparatus in which temperature overshoots are reduced by integrating a mixer valve and damping chamber in control apparatus for an ablutionary appliance.

Other objects and advantages of the invention will be apparent from the description hereinafter of exemplary embodiments.

According to one aspect of the present invention, there is provided a water supply installation comprising means for mixing hot and cold water for supply of blended water having a desired temperature to an ablutionary appliance and a chamber between an outlet of the mixing means and the appliance for stabilising the temperature of the blended water to reduce transient temperature overshoots.

By this invention, when a transient temperature overshoot occurs, the hotter (overshoot) water is continuously mixed with cooler water in the chamber and the temperature of the water flowing out of the chamber is less than the overshoot temperature. In this way, the chamber acts to damp out any temperature overshoot that occurs and the user does not experience the full effect of the temperature overshoot.

The extent to which the overshoot is damped is dependent on the thermal capacity of the chamber. Thus, for a given flow rate, the chamber may be arranged so that the overshoot is under damped, critically damped or over damped.

Typically, the flow rate is adjustable between upper and lower limits and the chamber is arranged to provide critical damping at a selected flow rate. In this way, temperature overshoots are substantially eliminated at the selected flow rate with other flow rates giving rise to a residual temperature overshoot or undershoot.

Preferably, the chamber is arranged to provide critical damping at the lower permitted flow rate with under damping at higher flow rates. As a result, a residual temperature overshoot is produced at higher flow rates. In most cases, however, this is significantly lower than the initial, undamped overshoot temperature and is hardly noticeable.

In general, a residual temperature overshoot is preferable to a residual temperature undershoot which delays the temperature change and gives rise to a more sluggish response. However, where critical damping at the lower permitted flow rate gives rise to an unacceptable residual temperature overshoot at the upper limit of the permitted flow rate, the thermal capacity of the chamber may be arranged to provide critical damping at an intermediate flow rate between the lower and upper limits.

More specifically, we have found that when the water temperature is increased from 25°C to 40°C, a chamber of 250cc provides critical damping at flow rates of about 10 litres per minute and a residual temperature overshoot of approximately 5°C at a flow rate of about 16 litres per minute. This overshoot is hardly noticeable and disappears within a few seconds. In contrast, under similar conditions without the chamber, the temperature overshoot can result in the user being exposed to water having a temperature as high as about 60°C.

Advantageously, the chamber is adapted to promote stirring and mixing of the water flowing through the chamber. For example, the chamber may have a portion of reduced cross-section between an inlet and an outlet to create turbulence within the chamber. Alternatively, or additionally, the chamber may be provided with internal formations such as vanes to create turbulence within the chamber.

The chamber may be made of a material having a low thermal mass and a low thermal conductivity, for example plastics materials. In this way, the thermal capacity of the chamber is largely dependent on the size (volume) of the chamber. As a result, the temperature of the water flowing through the chamber is largely unaffected when the temperature of the water discharged from the mixing valve is substantially constant under steady state operating conditions. However, temperature overshoots occurring when the selected temperature of the water is changed are damped out by mixing water at different temperatures within the chamber as described above.

The chamber can, however be made of materials having a high thermal mass and a high thermal conductivity, for example metals or alloys. In this way, the material itself contributes to the thermal capacity of the chamber and may enable a slight reduction in the size (volume) of the chamber to achieve the same damping effect as a chamber of low thermal mass and low thermal conductivity.

Generally, low thermal mass and low thermal conductivity materials such as plastics materials are preferred as being of light weight, lower cost and permitting manufacture of complex shapes by simple techniques such as blow moulding.

The means for mixing hot and cold water may be a mixer valve having a valve mechanism for controlling the relative proportions in which supplies of hot and cold water are mixed to produce blended water having a selected temperature for supply to the appliance. Preferably, the mixer valve is thermostatically controlled for maintaining the selected water temperature substantially constant.

The valve mechanism may be operable manually for user selection of the temperature of the blended water. For example, the valve mechanism may be operable by a rotatable control knob for user selection of a range of blended water temperatures.

A stop may be provided to limit rotation of the control knob to restrict selection of blended water temperatures up to a pre-determined temperature. The control knob may include an over-ride button for releasing the stop to allow selection of water temperatures higher than the pre-determined temperature.

In another arrangement, the valve is electrically operable, for example via a drive motor such as a stepper motor in response to user selection of a desired water temperature by any suitable input means to a programmable control system for the motor. The control system may include a microprocessor with a user interface for inputting desired water temperatures.

The installation may include a pump downstream of the mixer valve for boosting the flow rate of the blended water supplied to the appliance. The pump speed may be adjustable to vary the flow rate in response to user selection of a desired spray force. Alternatively or additionally, any other suitable means for controlling the flow rate may be provided

Preferably, the chamber is provided downstream of the pump and an outlet from the chamber is connectable to a spray fitting such as a shower handset or a fixed shower rose. The outlet may be formed integrally with the chamber. For example, the chamber and outlet may be formed as a plastic moulding.

An on-off valve such as a solenoid valve may be provided between the pump and the chamber to start and stop water flow. In this way, the chamber is drained when the on-off valve is closed.

The mixer valve, chamber, on-off valve and, where provided, pump may be integrated in a single unit as part of control apparatus having separate inlets for connection to supplies of hot and cold water and an outlet for connection to an ablutionary appliance.

The apparatus may provide a source of blended water for one or more ablutionary appliances. For example, the valve may be connected in a recirculation system supplying a plurality of appliances.

According to a second aspect of the present invention, there is provided shower control apparatus comprising a mixer valve having inlets for connection to supplies of hot and cold water and an outlet for temperature controlled water, and a chamber of pre-determined volume in communication with the outlet from the mixer valve for damping transient temperature changes and having an outlet for supply of the temperature controlled water to a shower fitting.

According to a third aspect of the present invention, there is provided a method of reducing temperature overshoots occurring when the temperature of water discharged from a mixer valve is changed, the method including the step of providing a chamber of pre-determined volume downstream of an outlet from the mixer valve for mixing and stirring hotter water discharged from the mixer valve under temperature overshoot conditions with cooler water within the chamber to reduce the overshoot.

The invention will now be described in more detail by way of example only with reference to the accompanying drawings.
Figure 1 is a front view of shower control apparatus embodying the invention;
Figure 2 is a front view of the apparatus shown in Figure 1 with the control knobs and front cover removed to show the internal components;
Figures 3 and 4 are graphs that illustrate the effect of the damping chamber of the apparatus shown in Figures 1 and 2 on temperature overshoot compared to the same apparatus without the chamber at different flow rates; and
Figure 5 is a graph that illustrates the effect of the damping chamber on temperature overshoot in a modified form of the apparatus shown in Figures 1 and 2.

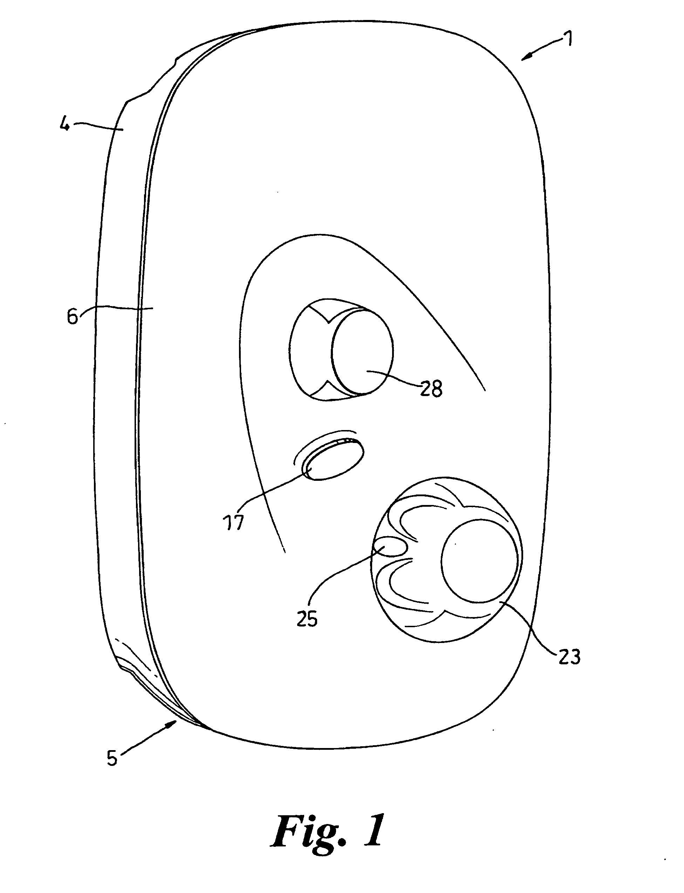

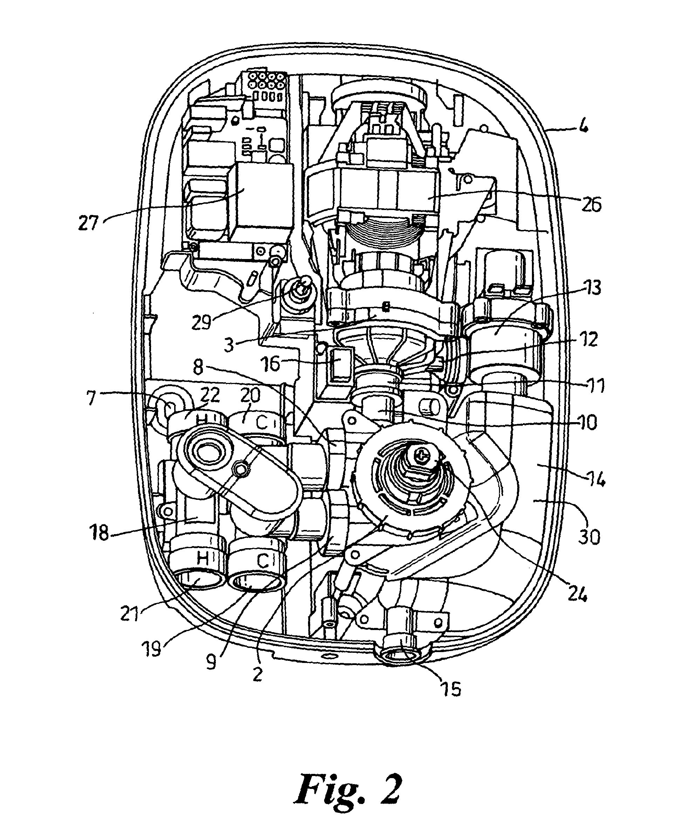

Referring to Figures 1 and 2 of the drawings, shower control apparatus 1 is shown comprising a thermostatic mixer valve 2 and a pump 3 mounted on a back plate 4 of a casing 5 provided with a removable front cover 6.

The back plate 4 has screw holes 7 (one only shown) by means of which the casing 5 can be secured to a wall or similar support surface. The back plate 4 and front cover 6 are typically plastic mouldings.

The mixer valve 2 has separate inlets 8,9 for connection to supplies of hot and cold water respectively and an outlet 10 connected to an inlet 11 of the pump 3.

An outlet 12 from the pump 3 is connected via an on/off solenoid valve 13 to a chamber 14 having an outlet 15 connectable to a spray fitting (not shown).

The on/off solenoid valve 13 is controlled by a switch 16 operable by a push button 17 to start and stop water flow. It will be understood, however, that any other means may be employed to start and stop the water flow.

Each inlet 8,9 of the mixer valve 2 is connectable to the incoming hot and cold water supplies via a manifold 18 including non-return valves (not shown) to prevent cross-flow of water supplies when the apparatus is switched off and strainers (not shown) to remove particulate material in the supplies.

As shown, the manifold 18 has two cold water ports 19,20 and two hot water ports 21,22 for receiving pipes from above or below. The pipe connections may be of the push-fit type.

In use, the cold water supply is connectable to one of the ports 19,20 and the hot water supply is connectable to one of ports 21,22. The unused ports are closed with blanking plugs (not shown).

In this way, the apparatus can be installed with bottom entry or rear entry of the water supplies to the casing 5. It will be appreciated that any other means may be employed for connecting the incoming hot and cold supplies to the mixer valve 2.

The mixer valve 2 is manually operable via a rotary control knob 23 mounted on a shaft 24 for controlling the temperature of the water delivered from the outlet 10 of the mixer valve 2 to the inlet 11 of the pump 3. The knob 23 is arranged for limited rotation for user selection of a range of water temperatures, for example from cold to 60°C.

A safety stop (not shown) is provided to limit rotation of the knob 23 to prevent selection of a water temperature above a pre-determined temperature. The knob 23 includes an over-ride button 25 to release the stop and allow user selection of water temperature above the pre-determined temperature.

In this way, user selection of water temperatures up to the pre-determined temperature is permitted and accidental or inadvertent selection of a water temperature above the pre-determined temperature is prevented.

The pre-determined temperature is typically set at about 40°C which is a comfortable, safe showering temperature for most users and allows anyone preferring a hotter shower to over-ride the stop.

The mixer valve 2 may be of any known type for controlling mixing of the hot and cold water supplies to produce blended water at the outlet 10 having the temperature selected by the user. For example, a shuttle valve axially movable between valve seats for the hot and cold water for varying the relative proportions of hot and cold water admitted to an internal mixing chamber.

The shuttle valve is operatively connected to the control knob 23 via a thermal control system including a thermostat (not shown) arranged to detect the temperature of the blended water and maintain the selected temperature of the blended water substantially constant.

In this embodiment, the thermostat contains a thermally responsive material such as wax and expansion/contraction of the wax in response to detected changes in the blended water temperature is used to adjust the shuttle valve to return the blended water temperature to that selected. It will be understood, however, that the thermostat may be of any suitable type as will be familiar to those skilled in the art.

In this way, changes in the blended water temperature due to changes in the temperature and/or pressure of either supply are automatically compensated by adjustment of the shuttle valve to vary the relative proportions of the hot and cold water admitted to the mixing chamber.

The mixer valve 2 may be manually operable for user selection of the desired water temperature as described. Alternatively, the mixer valve 2 may be electrically operable, for example by a motor such as a stepper motor in response to a programmable electronic control system such as a microprocessor with suitable user interface for selection and input of a desired water temperature

The mixer valve 2 may be in the form of a cartridge unit (not shown) detachably mounted in a valve body provided with the inlets 8,9 and outlet 10 that enables the mixer valve 2 to be removed for servicing or repair or replacement. Thermostatically controlled mixer valves are well known and will not be described further herein as they form no part of this invention.

Downstream of the outlet 10, the components transferring the water discharged from the mixer valve 2 to the spray fitting are largely made of plastics or other materials having a low thermal mass and low thermal conductivity.

In this way, the selected temperature of the water is substantially unchanged between the mixer valve 2 and the spray fitting during steady state operation.

A drive motor 26 for the pump 3 is operable via control circuits 27 and a rotary control knob 28 mounted on a shaft 29 for controlling the pump speed.

The knob 28 is arranged for limited rotation for user selection of a range of pump speeds which in turn determines the flow rate of the water delivered to the spray fitting and thus the spray force as described later herein.

The knob 28 may provide for continuous adjustment of the pump speed for selection of any desired spray force over the permitted range of pump speeds. Alternatively, the knob 28 may provide for selection of discrete pump speeds corresponding to different spray force settings.

In a modification (not shown), the knob 28 may be replaced by an array of push buttons permitting selection of discrete pump speeds corresponding to different spray settings.

In use, the solenoid valve 18 is opened by pressing the push button 17 and the user adjusts the control knobs 23,28 to select the desired temperature and adjust the flow to obtain the required spray force of the water discharged from the spray fitting.

If the user adjusts the control knob 23 to change the temperature of the water significantly, the mixer valve 2 may overshoot the selected temperature before settling at the selected temperature.

This can result in discharge of water from the valve 2 at a temperature higher than that selected for a short period of time. For example, if the selected temperature is changed from 25°C to 40°C, the temperature of the water discharged from the valve 2 may reach full hot (about 60°C) before settling at 40°C.

The temperature overshoot may only last a few seconds but the extent and duration of the overshoot is often sufficient to be noticeable to the user and is not comfortable to experience, especially for young children or the elderly.

This problem is made worse where the water leaving the outlet 10 of the mixer valve 2 is transferred to the spray fitting via components made of plastics or other materials having a low thermal mass and low thermal conductivity.

As a result, the temperature of the water remains substantially unchanged between the outlet 10 and the spray fitting and the user is exposed to the full effect of any temperature overshoot that occurs.

In accordance with the present invention, the chamber 14 acts to reduce any temperature overshoot that occurs. The chamber 14 has a volume compatible with the volume of water flowing during the overshoot event and is designed to ensure the water flowing through the chamber 14 is stirred and mixed together.

In this embodiment, the chamber 14 is designed to fit in the space available within the casing 5 and has a portion 30 of reduced cross-section to accommodate the mixer valve 2. The reduced cross-section assists in creating turbulence in the water flowing through the chamber 14 to promote stirring and mixing of the water within the chamber 14.

Alternatively or additionally, the chamber 14 may be provided with internal formations such as vanes or the like (not shown) to create turbulent flow conditions for achieving adequate mixing of the water within the chamber 14.

It will be understood that the design of the chamber 14 may be modified according to requirements for a given application and that the shape may be altered to suit the available space for locating the chamber 14.

As a result of the stirring and mixing that occurs within the chamber 14, if a temperature overshoot occurs, the hotter water does not flow directly to the spray fitting but is mixed with cooler water in the chamber 14 thereby reducing the extent of the overshoot.

In this way, we have found that the temperature of the water discharged from the spray fitting may only overshoot by a few degrees so as to be hardly noticeable by the user.

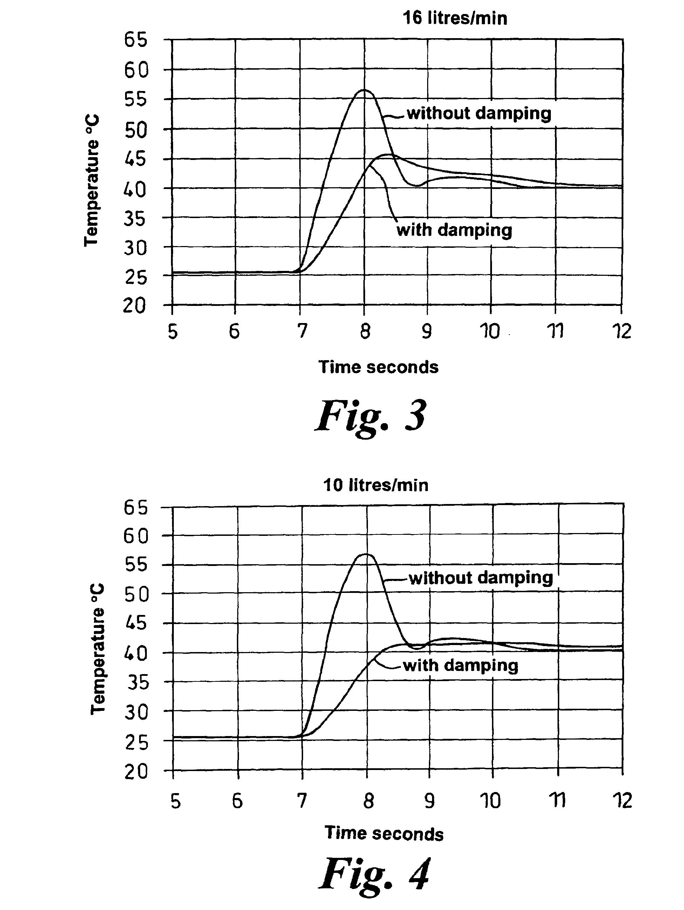

Figures 3 and 4 are graphs that show the effect on temperature overshoot when the water temperature is adjusted from 25°C to 40°C in the above-described apparatus with and without chamber 14. Figure 3 shows the effect at a flow rate of 16 litres per minute (266cc per second) and Figure 4 shows the effect at a flow rate of 10 litres per minute (166cc per second). In both cases, the volume of the chamber 14 is 250cc.

At the higher flow rate (Figure 3), the temperature overshoot is reduced from a peak of about 57°C (full hot) in the absence of chamber 14 to about 46°C before settling at 40°C in a few seconds where the chamber 14 is provided.

At the lower flow rate (Figure 4), the temperature overshoot is reduced from a peak of about 57°C (full hot) in the absence of chamber 14 to about 41°C before settling at 40°C in a few seconds where the chamber 14 is provided.

As will now be appreciated, the chamber 14 acts to damp out the temperature overshoot that occurs when suddenly changing the selected water temperature by more than a few degrees. In this way, any temperature overshoot can be reduced to be hardly noticeable or eliminated. As a result, the risk of a sudden hot shot of water being discharged from the spray fitting is reduced thereby providing a more comfortable shower experience.

It will be understood that the damping provided by the chamber will depend on the factors such as the flow rate, the volume of the chamber and the change in temperature of the mixed water producing the overshoot.

In general, the volume of the chamber should be compatible with the permitted flow rate of the water. Thus, in the above example, the chamber has a volume of 250cc which substantially eliminates temperature overshoot at the lower flow rate of 10 litres per minute and reduces significantly temperature overshoot at the higher flow rate of 16 litres per minute. In this way, the chamber 14 provides effective damping of temperature overshoots over the permitted range of flow rates.

In the above-described example, the chamber 14 is made of plastics material having low thermal mass and conductivity. As a result, the thermal capacity of the chamber 14 to damp temperature overshoots is largely determined by the size (volume) of the chamber 14 and this is chosen to be compatible with the permitted flow rates to achieve sufficient mixing of the water within the chamber 14 as above-described.

It will be understood, however, that the chamber 14 could be made of other materials such as metal or alloy having a high thermal mass and conductivity that contributes to the damping effect and may allow the size (volume) of the chamber 14 to be reduced slightly to achieve the same overall damping effect.

It will also be understood that the benefits and advantages of the chamber to damp out transient temperature overshoots are not limited to the apparatus above-described.

Thus any shower apparatus in which supplies of hot and cold water are admixed to produce a source of pre-conditioned water having a desired temperature may benefit from the provision of a chamber downstream of the point of mixing the supplies.

For example, in a modification (not shown) of the apparatus above-described, the mixer valve may be controlled by a programmable electronic control system such as a microprocessor with a suitable user interface for selection and input of a desired water temperature. The control system may operate an electric motor such as a stepper motor to control the mixer valve in response to user selection of the desired water temperature and to adjust the shuttle valve in response to detected changes in the blended water temperature to maintain the selected temperature.

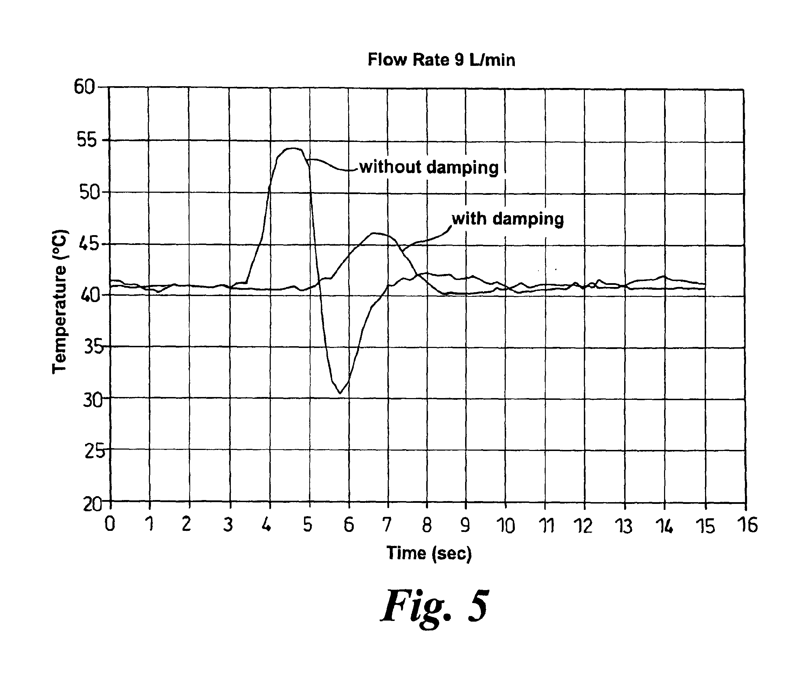

With such control system, large transient temperature variations in the blended outlet water temperature can sometimes occur when a sudden change in operating conditions occurs. This is undesirable and Figure 5 is a graph that shows the effect on such transient temperature variations of providing a damping chamber identical to that above-described at a flow rate of 9 litres per minute (150cc per second).

The graph shows the blended water temperature from temperature sensors arranged immediately at the outlet of the mixer valve before the damping chamber, and also about 900mm downstream after the damping chamber. The temperature sensor at the outlet from the damping chamber produces an output that is delayed due to the transport time taken for the water to travel the 900 mm along the pipe system. As shown, the blended water temperature at the outlet from the mixer valve increases from 41°C to 54°C and then decreases to 31°C before returning to 41°C. This produces a total transient temperature change of 23°C. By providing the damping chamber this transient temperature change is reduced to 5°C at the outlet from the damping chamber.

In the above-described examples, the chamber is provided in shower control apparatus including the mixer valve, pump and associated controls for connection to an ablutionary appliance integrated in a single unit.

It will be understood, however, that this is not essential and the chamber could be provided separate from the control apparatus at any point in the flow path between the mixer valve and the appliance.

For example, where the mixer valve supplies a plurality of valves, a single chamber of appropriate size may not be practical and it may be necessary to provide a separate chamber in the flow line to each valve.

It will also be appreciated that the invention is not limited to apparatus in which a pump is provided to boost the flow rate of the water delivered to the spray fitting and the chamber may be employed to damp out transient temperature overshoots in arrangements without a pump.

Where provided, the pump may be adjustable to vary the flow and thus the spray force as described or it may provide a constant flow, for example where one or both of the hot and cold supplies is low pressure, with separate means provided for adjusting the flow rate.

Other improvements and modifications that can be made will be apparent to those skilled in the art.

## Claims

1. A water supply installation comprising means (2) for mixing hot and cold water for supply of blended water having a desired temperature to an ablutionary appliance, and a chamber (14) between an outlet (10) of the mixing means (2) and the appliance for stabilising the temperature of the blended water to reduce transient temperature overshoots.

2. A water supply installation according to claim 1 **characterised in that**, the chamber (14) is arranged such that, when a transient temperature overshoot occurs, the hotter (overshoot) water is continuously mixed with cooler water in the chamber (14) and the temperature of the water flowing out of the chamber (14) is less than the overshoot temperature.

3. A water supply installation according to claim 1 or claim 2 **characterised in that**, means (3) is provided for adjusting flow rate of the blended water between upper and lower limits and the chamber (14) provides critical damping at a pre-determined flow rate, and preferably provides critical damping at the lower limit.

4. A water supply installation according to any one of the preceding claims **characterised in that**, the chamber (14) is adapted to promote stirring and mixing of the water flowing through the chamber (14), for example the chamber (14) is provided with means (30) to create turbulence within the chamber (14) such as a portion (30) of reduced cross-section between an inlet and an outlet (15) of the chamber (14) and/or internal formations within the chamber (14).

5. A water supply installation according to any one of the preceding claims **characterised in that**, the chamber (14) is made of a material having a low thermal mass and a low thermal conductivity, for example the chamber (14) is made of plastics material.

6. A water supply installation according to any one of the preceding claims **characterised in that**, the mixer means (2) for mixing hot and cold water is a mixer valve (2) having a valve mechanism for controlling the relative proportions in which supplies of hot and cold water are mixed to produce blended water having a selected temperature for supply to the appliance and is preferably thermostatically controlled for maintaining the selected water temperature substantially constant, for example by a wax thermostat responsive to the water temperature or an electronic control system responsive to the water temperature.

7. A water supply installation according to claim 6 **characterised in that**, a pump (3) is provided downstream of the mixer valve (2) and the pump speed is preferably adjustable to vary the flow rate in response to user selection of a desired spray force.

8. A water supply installation according to claim 7 **characterised in that**, the chamber (14) is provided downstream of the pump (3) and an on-off valve (13) is preferably provided between the pump (3) and the chamber (14) to start and stop water flow.

9. Shower control apparatus comprising a mixer valve (2) having inlets (8,9) for connection to supplies of hot and cold water and an outlet (10) for temperature controlled water, and a chamber (14) of pre-determined volume in communication with the outlet (10) from the mixer valve (2) for damping transient temperature changes and having an outlet (15) for supply of the temperature controlled water to a shower fitting.

10. A method of reducing temperature overshoots occurring when the temperature of water discharged from a mixer valve is changed, the method including the step of providing a chamber (14) of pre-determined volume downstream of an outlet (10) from the mixer valve (2) for mixing and stirring hotter water discharged from the mixer valve (2) under temperature overshoot conditions with cooler water within the chamber (14) to reduce the overshoot.
